# EUROPÄISCHE PATENTSCHRIFT

(11) **EP 2 850 607 B1**
(45) Veröffentlichungstag und Bekanntmachung des Hinweises auf die Patenterteilung: **10.07.2019**
(21) Anmeldenummer: 13722727.8
(22) Anmeldetag: 06.05.2013
(51) Int. Cl.: G08G 1/01, G08G 1/0967

(54) **VERFAHREN UND SYSTEM ZUR ERSTELLUNG EINES AKTUELLEN SITUATIONSABBILDS**
METHOD AND SYSTEM FOR CREATING A CURRENT SITUATION DEPICTION
PROCÉDÉ ET SYSTÈME DE CRÉATION D'UNE REPRÉSENTATION ACTUELLE D'UNE SITUATION

(30) Priorität: 16.05.2012 DE 102012208254
(43) Veröffentlichungstag der Anmeldung: 25.03.2015
(73) Patentinhaber: Continental Teves AG & Co. OHG, 60488 Frankfurt am Main (DE)
(72) Erfinder: STRAUSS, Matthias, 64319 Pfungstadt (DE); STÄHLIN, Ulrich, 65760 Eschborn (DE)
(86) Internationale Anmeldenummer: PCT/EP2013/059397
(87) Internationale Veröffentlichungsnummer: WO 2013/171088

(56) Entgegenhaltungen:
- EP-A2- 1 321 742
- EP-A2- 1 921 588
- WO-A1-02/08695
- DE-A1- 19 513 640
- DE-A1-102006 010 572
- US-A- 5 173 691
- US-A1- 2009 138 190

## Beschreibung

Die Erfindung betrifft ein Verfahren zur Erstellung eines aktuellen Situationsabbilds gemäß Oberbegriff von Anspruch 1 und ein System zur Erstellung eines aktuellen Situationsabbilds gemäß Oberbegriff von Anspruch 8.

Im Stand der Technik sind unterschiedliche Gattungen von Fahrerassistenzsystemen bekannt, denen im Wesentlichen gemein ist, dass sie der Entlastung des Fahrers im Verkehrsgeschehen dienen. Derartige Systeme basieren dabei teilweise auf mittels Umfeldsensorik erfassten Umfeldinformationen, auf aus digitalem Kartenmaterial ausgelesenen Informationen oder auch auf Informationen, die mittels Fahrzeug-zu-X-Kommunikation empfangen wurden. Alle diese Systeme sind zur Unterstützung des Fahrers auf eine hohe Zuverlässigkeit und Aktualität der erfassten Informationen sowie eine möglichst große Informationsdichte angewiesen.

In diesem Zusammenhang beschreibt die DE 10 2008 060 869 A1 ein Verfahren und eine Vorrichtung zur Unterstützung eines Bedieners eines Fahrzeugs, welches sich einer Verkehrssignalanlage nähert. Die Verkehrssignalanlage verfügt über zwei unterschiedliche Betriebszustände, wobei in einem ersten Betriebszustand ein Überfahren der Haltelinie erlaubt ist und in einem zweiten Betriebszustand ein Überfahren der Haltelinie nicht erlaubt ist. Das Fahrzeug empfängt dabei ein Signal, welches den aktuellen Betriebszustand der Verkehrssignalanlage sowie die Zeitdauer bis zu einem Wechsel des Betriebszustands beschreibt. Anhand des empfangenen Signals prüft das Fahrzeug, ob die Haltelinie der Verkehrssignalanlage mit einer Geschwindigkeit aus einem vorgegebenen Geschwindigkeitsbereich erreicht werden kann, während sich die Verkehrssignalanlage im ersten Betriebszustand befindet. In Abhängigkeit des Ergebnisses der Prüfung wird die Geschwindigkeit des Fahrzeugs beeinflusst oder dem Fahrer eine Empfehlung zu einer entsprechenden Beeinflussung der Geschwindigkeit gegeben.

Aus der DE 10 2007 048 809 A1 ist ein Verfahren zur Erkennung von verdeckten Objekten im Straßenverkehr bekannt. Dabei werden die Umgebung eines Fahrzeugs sowie Bewegungsgrößen des Fahrzeugs sensorisch erfasst. Diese Informationen werden mittels Fahrzeug-zu-Fahrzeug-Kommunikation an im Umfeld befindliche Fahrzeuge übertragen. Gleichzeitig werden von den im Umfeld befindliche Fahrzeugen ebenfalls Umgebungs- und Bewegungsinformationen erfasst und gesendet. Die empfangenen Informationen werden dazu verwendet, ein Umfeldmodell zu erweitern. Das solcherart erweiterte Umfeldmodell wird mittels einer Anzeige im Fahrzeug aktualisiert wiedergegeben und kann einem oder mehreren Fahrerassistenzsystemen zur Verfügung gestellt werden. Somit stehen im Fahrzeug Informationen über Objekte zur Verfügung, welche von den Fahrzeugsensoren selbst nicht erfasst werden können.

In der DE 10 2009 008 959 A1 wird ein Fahrzeugsystem zur Navigation und/oder Fahrerassistenz beschrieben. Das Fahrzeugsystem umfasst eine Providereinheit, zumindest einen Umfeldsensor und einen Fahrzeugsensor. Die Providereinheit umfasst ihrerseits ein auf einem Satellitensignalsensor basierendes Positionsmodul und einen ADAS-Horizontprovider, welcher mit einer Navigationseinheit, die sich auch außerhalb des Fahrzeugs befinden kann, kommunikativ koppelbar ist. Die Navigationseinheit kann dabei z.B. als leistungsstarker Server ausgeführt sein, welcher Kartenausschnitte einer digitalen Karte an die Providereinheit übermittelt.

Die DE 10 2008 012 660 A1 offenbart ein Verfahren zur serverbasierten Warnung von Fahrzeugen vor Gefahren sowie eine entsprechende Gefahrenwarneinheit. Dabei wird ein Messwert mittels einer Erfassungseinheit eines ersten Fahrzeugs erfasst und es wird bestimmt, ob der Messwert mit einer Gefahr korrespondiert. Sofern der Messwert mit einer Gefahr korrespondiert, werden Informationsdaten über die Gefahr an eine Zentrale übermittelt. In der Zentrale werden die Art der Gefahr, der Ort, an dem der Messwert erfasst wurde, die Zeit, zu der der Messwert erfasst wurde sowie eine Identifikation des übermittelnden Fahrzeugs gespeichert und entsprechende Warndaten erzeugt. Die für ein zweites Fahrzeug relevanten Warndaten können von diesem zweiten Fahrzeug von der Zentrale abgerufen werden.

Die EP 1 321 742 A2 beschreibt ein Verfahren und eine Vorrichtung zur Erzeugung und Aktualisierung einer Wege- und/oder Wegezustandskarte unter Verwendung von Wegeinformationen und Informationen über den Zustand von Verkehrsmitteln, wobei am Verkehr teilnehmende Verkehrsmittel über ein drahtloses Telekommunikationsnetz positionsbezogene Informationen an einen zentralen Rechner übermitteln, wobei die Verkehrsmittel wetterrelevante Zustandsdaten des Verkehrsmittels positionsbezogen an den zentralen Rechner übermitteln und der zentrale Rechner aufgrund der empfangenen Daten ortsbezogen verkehrsrelevante Wetterzustände und/oder Wegezustände bestimmt.

Die im Stand der Technik bekannten Verfahren und Systeme sind jedoch insofern nachteilbehaftet, als dass die einem Fahrerassistenzsystem mittels Fahrzeug-zu-X-Kommunikation zur Verfügung gestellten Informationen entweder auf einen einzelnen bestimmten Aspekt des Verkehrsgeschehens beschränkt sind, wie dies z.B. bei Ampelassistenten oder Gefahrenwarnungen der Fall ist, oder aber die im komplexen Stadtverkehr notwendigen Informationen nicht mit einer hierfür benötigten Zuverlässigkeit und Aktualität bereitstellen können, so dass derartige Assistenzsysteme nur in außerstädtischen Gebieten ausreichend zuverlässig sind. Insbesondere in Kreuzungsbereichen gilt es, eine Vielzahl unterschiedlicher Verkehrsregeln zu beachten und gleichzeitig den Fahrerwunsch zu erkennen, um den Fahrer wirksam entlasten zu können. Hierfür ist das Vorhandensein von sowohl stets aktuellen als auch exakten Informationen, wie z.B. über Baustellen, Umleitungen oder geänderte Beschilderungen, jedoch eine wichtige Voraussetzung. Es ist somit eine kontinuierliche und detaillierte Erfassung sowie Aktualisierung dieser Informationen notwendig.

Die Aufgabe der vorliegenden Erfindung ist es daher, ein Verfahren vorzuschlagen, welches ein aktuelles Situationsabbild sowohl mit einer vergleichsweise großen Detailtiefe erstellt als auch eine hohe Aktualisierungsrate aufweist.

Diese Aufgabe wird erfindungsgemäß durch das Verfahren zur Erstellung eines aktuellen Situationsabbilds gemäß Anspruch 1 gelöst.

Gemäß dem erfindungsgemäßen Verfahren zur Erstellung eines aktuellen Situationsabbilds, insbesondere eines aktuellen innerstädtischen Situationsabbilds, werden eine lokal begrenzte Situation beschreibende Umfelddaten zur Beschreibung von Objekten, die zur Topologie des Fahrzeugumfelds beitragen, und/oder durch die Umfelddaten ergänzte Kartendaten von einer Vielzahl von Fahrzeugen mittels Fahrzeug-zu-X-Kommunikationsmitteln an eine Datenbank gesendet. Die Umfelddaten werden dabei mittels Umfeldsensoren und/oder Fahrzeugsensoren erfasst, die Kartendaten werden aus einem digitalen Speicher ausgelesen. Das Verfahren zeichnet sich dadurch aus, dass die Umfelddaten und/oder die durch die Umfelddaten ergänzten Kartendaten mit einem in der Datenbank bereits vorhandenen Situationsabbild kontinuierlich zu einem aktuellen Situationsabbild fusioniert werden und sowohl die Datenbank als auch das Situationsabbild ortsfest sind. Daraus ergibt sich der Vorteil, dass jedes sich in der Situation befindende und mit geeigneten Sensoren ausgestattete Fahrzeug das in der Datenbank vorhandene Situationsabbild aktualisieren und ergänzen kann. Somit steht, insbesondere in innerstädtischen Gebieten, ständig eine vergleichsweise große Zahl von von der Vielzahl von Fahrzeugen gesendeten Umfelddaten und/oder Kartendaten und/oder Positionsdaten zur Verfügung, um das vorhandene Situationsabbild zu aktualisieren bzw. zu ergänzen. Dadurch können selbst komplexe und sich vergleichsweise häufig ändernde Situationen zuverlässig beschrieben werden. Ein zusätzlicher infrastrukturseitiger Installationsaufwand an geeigneten Sensoren zur Situationserfassung ist dabei nicht notwendig. Das solcherart erstellte Situationsabbild kann u.a. Straßenverläufe, Vorfahrtsregeln, Abbiegestreifen, Fußgängerüberwege, Ampelpositionen, Baustellen und liegengebliebene Fahrzeuge oder andere Hindernisse umfassen. Selbst dann, wenn sich zwischenzeitlich keine Fahrzeuge im Situationsabbild aufhalten und somit zwischenzeitlich keine Umfelddaten und/oder Kartendaten und/oder Positionsdaten an die Datenbank gesendet werden, kann bei erneutem Eintreffen von Fahrzeugen im Situationsabbild das vorhandene Situationsabbild unverzüglich mit den dann empfangenen Umfelddaten und/oder Kartendaten und/oder Positionsdaten fusioniert werden, da sowohl das Situationsabbild als auch die Datenbank ortsfest sind und nicht verloren gehen bzw. gelöscht werden. Dies stellt einen wesentlichen Vorteil gegenüber aus dem Stand der Technik bekannten Verfahren dar, bei denen sich die Datenbanken in den einzelnen Fahrzeugen befindet und die Situationsabbilder somit ständig neu erstellt bzw. verworfen werden müssen, da sich das Fahrzeug während der Fahrt stetig fortbewegt und in neue Situationsabbilder eintritt.

Die Umfelddaten beschreiben erfindungsgemäß das vom Fahrzeug erfasste Umfeld, beispielsweise mittels eines geeigneten Sensors erfasste Beschilderungen, Ampelmasten, Leitplanken, Häuserwände, Bordsteine und allgemein alle Objekte, die zur Topologie des Fahrzeugumfelds beitragen. Auch mittels ESP-Sensorik erfasste Schlaglöcher werden im Sinne der Erfindung als Umfelddaten verstanden. Zu den von den Umfelddaten umfassten Objekten zählen weiterhin andere Fahrzeuge und Verkehrsteilnehmer, sofern sie sensorisch erfasst werden. Der Begriff Umfelddaten beschreibt somit sowohl Informationen über statische als auch über nicht-statische Objekte. Die Kartendaten hingegen beschreiben eine im Fahrzeug vorhandene lokale Karte und können sowohl Routeninformationen und Straßenverlaufsinformationen umfassen als auch durch Umfelddaten ergänzt sein. Die Positionsdaten geben die Position des die Daten sendenden Fahrzeugs an und werden ebenfalls im aktuellen Situationsabbild abgebildet. Die Bestimmung der Positionsdaten durch die Fahrzeuge erfolgt mittels eines globalen Satellitenpositionssystems, wie z.B. GPS oder Galileo, und wird bevorzugt durch Map-Matching bzw. Koppelnavigation ergänzt.

Bevorzugt ist es vorgesehen, dass die Datenbank das aktuelle Situationsabbild an die von der lokal begrenzten Situation umfassten Fahrzeuge sendet und das aktuelle Situationsabbild von den Fahrzeugen mindestens einem Fahrerassistenzsystem zur Verfügung gestellt wird. Somit steht allen von der lokalen Situation umfassten Fahrzeugen ein vergleichsweise aktuelles und detailliertes Situationsabbild zur Verfügung, welches von den vorhandenen Fahrerassistenzsystemen zur Unterstützung und Entlastung des Fahrers sowie ggf. zur Unfallvermeidung oder zumindest zur Unfallabmilderung genutzt werden kann. Beispielsweise kann situationsabhängig eine Warnung an den Fahrer ausgegeben werden oder sogar ein Eingriff in die Fahrzeugsteuerung durchgeführt werden. Des Weiteren kann durch einen Vergleich einer im Fahrzeug vorhandenen Karte und des empfangenen aktuellen Situationsabbilds eine verbesserte Positionsbestimmung durchgeführt werden.

In einer weiteren bevorzugten Ausführungsform ist es vorgesehen, dass Objekte und Ereignisse im aktuellen Situationsabbild von der Datenbank mit Existenzwahrscheinlichkeiten versehen werden. Daraus ergibt sich der Vorteil, dass eine vergleichsweise feine Abstufung hinsichtlich des tatsächlichen Vorhandenseins und damit der Bedeutung der Objekte und Ereignisse möglich wird. Die Existenzwahrscheinlichkeiten der Objekte und Ereignisse können z.B. aus dem Anteil der sie erfassenden Sensoren zu dem Anteil der sie nicht-erfassenden Sensoren bestimmt werden, wobei Sensoren, welche nicht zur Erfassung der jeweiligen Objekte oder Ereignisse geeignet sind, zur Bestimmung der Existenzwahrscheinlichkeiten unberücksichtigt bleiben. Somit wird es auch möglich, mehrere, sich prinzipiell widersprechende Objekte oder Ereignisse mit unterschiedlichen Existenzwahrscheinlichkeiten an derselben Position abzubilden.

Zweckmäßigerweise ist es vorgesehen, dass die Existenzwahrscheinlichkeiten der Objekte von einem empfangenden Fahrzeug zusätzlich individuell ausgewertet werden. Somit kann ein das aktuelle Situationsabbild empfangendes Fahrzeug mittels seiner eigenen Bordsensorik entscheiden, welche Existenzwahrscheinlichkeit einem Objekt oder einem Ereignis zuerkannt werden soll. Die empfangenen Informationen können beispielsweise genutzt werden, die Erkennungsschwellen für bestimmte Objekte oder Ereignisse in einem Objekt- oder Ereigniserkennungsalgorithmus der Bordsensorik herabzusetzen.

Außerdem ist es vorteilhaft, dass die Umfelddaten und/oder die Kartendaten und/oder die Positionsdaten von der Vielzahl von Fahrzeugen mit vergleichsweise geringer Übertragungspriorität an die Datenbank gesendet werden. Somit wird das Senden und Empfangen von vergleichsweise wichtigen Daten, wie z.B. sog. "Cooperative Awareness Messages" oder Warninformationen nicht gestört oder sogar unterbrochen. Für die Erstellung des aktuellen Situationsabbilds ist es ausreichend, wenn die Umfelddaten und/oder Kartendaten und/oder Positionsdaten nicht in jedem Sendezyklus an die Datenbank gesendet werden.

Bevorzugt ist es vorgesehen, dass von der Vielzahl von Fahrzeugen nur derartige Umfelddaten und/oder Kartendaten und/oder Positionsdaten an die Datenbank gesendet werden, die vom von der Datenbank gesendeten aktuellen Situationsabbild abweichen. Dadurch wird die Menge der zu übertragenden Daten in der Regel deutlich reduziert und die Übertragungskapazität der zur Verfügung stehenden Übertragungskanäle wird nicht unnötig belastet.

Zweckmäßigerweise ist es vorgesehen, dass von der Vielzahl von Fahrzeugen Positionsdaten mittels eines globalen Satellitenpositionssystems bestimmt und mittels der Fahrzeug-zu-X-Kommunikationsmittel an die Datenbank gesendet werden und wobei die gesendeten Positionsdaten eine Identifikationsinformation der zu einer Bestimmung der Positionsdaten herangezogenen Satelliten umfassen. Diese Satelliten folgen in der Regel festen Bahnen in einer Erdumlaufbahn. Da die Satelliten somit nur zu bestimmten Tageszeiten von bestimmten Punkten der Erdoberfläche aus sichtbar sind, kann anhand der Identifikationsinformation ermittelt werden, welche Satelliten zur Bestimmung eines bestimmten Satzes von Positionsdaten herangezogen wurden. Dies ermöglicht eine verbesserte Positionsbestimmung, insbesondere eine verbesserte relative Positionsbestimmung zwischen zwei oder mehr Fahrzeugen.

Die Erfindung betrifft weiterhin ein System zur Erstellung eines aktuellen Situationsabbilds für einen festen Ort, insbesondere eines aktuellen innerstädtischen Situationsabbilds. Das System umfasst
eine Datenbank mit Datenfusionsmitteln und Fahrzeug-zu-X-Kommunikationsmitteln sowie eine Vielzahl von Fahrzeugen mit jeweils einem digitalen Speicher und/oder Umfeldsensoren und/oder Fahrzeugsensoren und Fahrzeug-zu-X-Kommunikationsmitteln. Die Datenbank empfängt eine lokal begrenzte Situation an dem festen Ort beschreibende Umfelddaten zur Beschreibung von Objekten, die zur Topologie des Fahrzeugumfelds beitragen, und/oder durch die Umfelddaten ergänzte Kartendaten von der Vielzahl von Fahrzeugen mittels der Fahrzeug-zu-X-Kommunikationsmittel. Die Vielzahl von Fahrzeugen erfasst die Umfelddaten an dem festen Ort mittels der Umfeldsensoren und/oder Fahrzeugsensoren, liest die Kartendaten aus dem jeweils einen digitalen Speicher aus. Das System zeichnet sich dadurch aus, dass die Datenfusionsmittel die Umfelddaten und/oder die durch die Umfelddaten ergänzten Kartendaten mit einem in der Datenbank bereits vorhandenen Situationsabbild kontinuierlich zu einem aktuellen Situationsabbild für den festen Ort fusionieren und sowohl die Datenbank als auch das Situationsabbild ortsfest sind. Das erfindungsgemäße System umfasst somit alle notwendigen Mittel zur Ausführung des erfindungsgemäßen Verfahrens und ermöglicht auf einfache Weise eine detaillierte und im Wesentlichen stets aktuelle Erstellung des aktuellen Situationsabbilds. Daraus ergeben sich die bereits beschriebenen Vorteile.

Vorzugsweise zeichnet sich das System dadurch aus, dass die Datenbank lokal an einem vom Situationsabbild umfassten Ort angeordnet ist. Dadurch ergibt sich der Vorteil, dass die Übertragung der Informationen über vergleichsweise schnell übertragende, kurzreichweitige Kommunikationsmittel erfolgen kann. Dadurch wird ausschließlich lokale Übertragungskapazität der zur Verfügung stehenden Übertragungskanäle genutzt. Ein weiterer Vorteil besteht darin, dass durch die lokale Anordnung der Datenbank keine aufwändige Dateninfrastruktur zu einer zentralen Datenbank vorgehalten werden muss.

Weiterhin ist es vorteilhaft, dass die Umfeldsensoren und/oder Fahrzeugsensoren ein oder mehrere Elemente aus der Gruppe
- Radarsensor,
- optischer Kamerasensor,
- Lidarsensor,
- Lasersensor,
- Ultraschallsensor,
- ESP-Sensor,
- Beschleunigungssensor,
- ABS-Sensor und
- Neigungssensor
sind und die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung und
- Mobilfunkverbindung

Umfelddaten und/oder die Kartendaten und/oder die Positionsdaten senden und/oder empfangen. Bei den genannten Sensoren handelt es sich um im Kraftfahrzeugbereich typischerweise verwendete Sensorgattungen, die im Wesentlichen eine umfassende Erfassung und Erkennung des Fahrzeugumfelds und des Fahrzeugzustands ermöglichen. Zum gegenwärtigen Zeitpunkt ist bereits eine Vielzahl von Fahrzeugen standardmäßig mit mehreren Sensoren der genannten Gattungen ausgestattet und diese Zahl wird in Zukunft aller Voraussicht nach weiter zunehmen. Der zusätzliche Ausrüstungsaufwand zur Implementierung des erfindungsgemäßen Verfahrens in ein Kraftfahrzeug ist daher gering. Die aufgeführten Verbindungsklassen der Fahrzeug-zu-X-Kommunikationsmittel bieten unterschiedliche Vor- und Nachteile, je nach Art und Wellenlänge. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate. Dafür ist der Verbindungsaufbau jedoch vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können

Bevorzugt ist es vorgesehen, dass das System das erfindungsgemäße Verfahren ausführt.

Weitere bevorzugte Ausführungsformen ergeben sich aus den Unteransprüchen und den nachfolgenden Beschreibungen von Ausführungsbeispielen an Hand von Figuren.

Es zeigt
- Fig. 1: schematisch das Entstehen eines aktuellen Situationsabbilds in einer Datenbank,
- Fig. 2: schematisch das Eintragen von Objekten im aktuellen Situationsabbild und das Versehen der Objekte mit Existenzwahrscheinlichkeiten sowie
- Fig. 3: einen beispielhaften Ablauf des erfindungsgemäßen Verfahrens in Form eines Flussdiagramms.

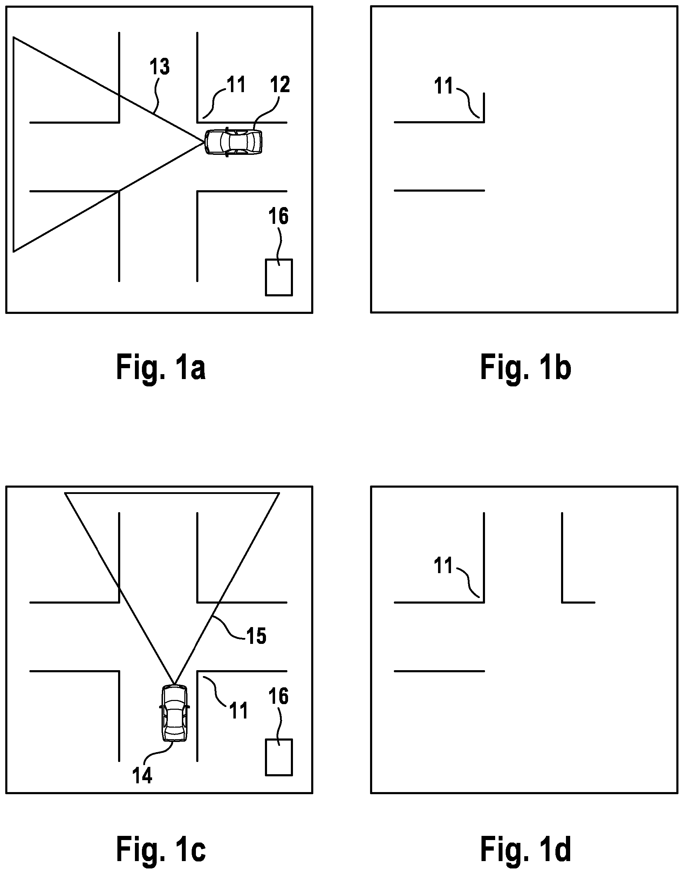

In Fig. 1a ist schematisch Kreuzung 11 zu sehen, in welche Fahrzeug 12 von rechts kommend einfährt. Fahrzeug 12 ist mit einem Kamerasensor ausgestattet, der kegelförmigen Bereich 13 von Kreuzung 11 erfasst. Die Umfelddaten, die kegelförmiger Bereich 13 umfasst, werden mittels Fahrzeug-zu-X-Kommunikation unter Verwendung einer WLAN-Verbindung an lokale Datenbank 16 übertragen. Lokale Datenbank 16 ist nahe bei Kreuzung 11 angeordnet und enthält nun die in Fig. 1b dargestellten Informationen über Kreuzung 11. Kurz darauf fährt Fahrzeug 14 von unten kommend in Kreuzung 11 ein (Fig. 1c). Fahrzeug 14 ist ebenfalls mit einem Kamerasensor ausgestattet und erfasst über den Kamerasensor kegelförmigen Bereich 15 von Kreuzung 11. Diese von kegelförmigem Bereich 15 umfassten Umfelddaten werden ebenfalls über eine WLAN-Verbindung an lokale Datenbank 16 gesendet und dort mit den bereits vorhandenen Daten fusioniert. Somit liegt in der Datenbank das in Fig. 1d dargestellte aktuelle Situationsabbild vor. Die Positionsdaten von Fahrzeugen 12 und 14 werden beispielsgemäß nicht in das aktuelle Situationsabbild aufgenommen.

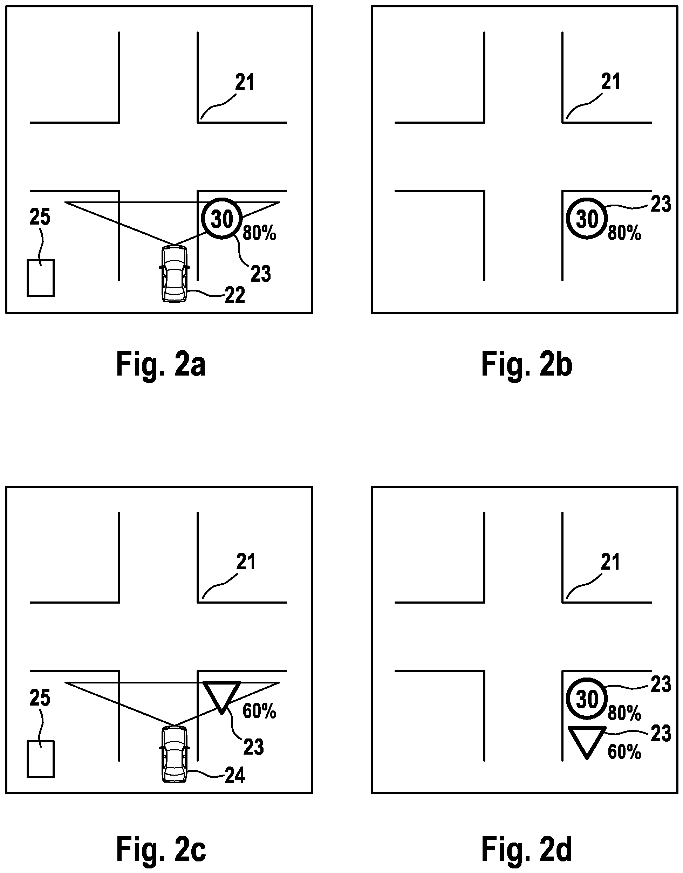

Fig. 2a zeigt Kreuzung 21. Fahrzeug 22 fährt in Kreuzung 21 ein und erkennt mittels eines Kamerasensors an Kreuzung 21 angeordnetes Verkehrszeichen 23 als Geschwindigkeitsbegrenzung "Tempo 30". Die Existenzwahrscheinlichkeit von Verkehrszeichen 23 mit der Eigenschaft "Tempo 30" wird von Fahrzeug 22 nach Auswertung durch einen Objekterkennungsalgorithmus mit 80 % angenommen. Sowohl die Verkehrszeichen 23 beschreibenden Umfelddaten als auch die angenommene, zugehörige Existenzwahrscheinlichkeit werden an lokale Datenbank 25 mittels Fahrzeug-zu-X-Kommunikation unter Verwendung einer ISM-Verbindung gesendet und dort mit den bereits vorhandenen Daten fusioniert. Das somit erstellte, aktuelle Situationsabbild ist in Fig. 2b zu sehen und wird an alle weiteren in die Kreuzung einfahrenden Fahrzeuge gesendet. In Fig. 2c fährt Fahrzeug 24 in Kreuzung 21 ein und erfasst ebenfalls mittels eines Kamerasensors Verkehrszeichen 23. Fahrzeug 24 erkennt Verkehrszeichen 23 jedoch nicht als Geschwindigkeitsbegrenzung "Tempo 30", sondern als "Vorfahrt achten!". Ein der Objekterkennung zugrunde liegender Objekterkennungsalgorithmus nimmt die Existenzwahrscheinlichkeit von Verkehrszeichen 23 mit der Eigenschaft "Vorfahrt achten!" mit 60 % an. Diese Daten werden von Fahrzeug 24 ebenfalls an lokale Datenbank 25 gesendet und dort mit dem bereits vorhandenen Situationsabbild zu einem aktuellen Situationsabbild fusioniert (Fig. 2d). Das aktuelle Situationsabbild enthält somit an der Position von Verkehrszeichen 23 zwei sich widersprechende Objekte mit unterschiedlichen Existenzwahrscheinlichkeiten. Diese Daten werden von der lokalen Datenbank an alle weiteren in Kreuzung 21 einfahrenden Fahrzeuge gesendet und in den Fahrzeugen entsprechenden Fahrerassistenzsystemen zur Verfügung gestellt. Die ebenfalls gesendeten Existenzwahrscheinlichkeiten werden von den weiteren Fahrzeugen genutzt, um einen Schwellenwert eines Objekterkennungsalgorithmus zu reduzieren. Da die in der lokalen Datenbank vorhandene Existenzwahrscheinlichkeit für Verkehrszeichen 23 mit der Eigenschaft "Tempo 30" 80 % beträgt und die Existenzwahrscheinlichkeit für Verkehrszeichen 23 mit der Eigenschaft "Vorfahrt achten!" nur 60 % beträgt, wird der Schwellenwert für die Erkennung von Verkehrszeichen 23 mit der Eigenschaft "Tempo 30" entsprechend stärker reduziert als für die Erkennung mit der Eigenschaft "Vorfahrt achten!".

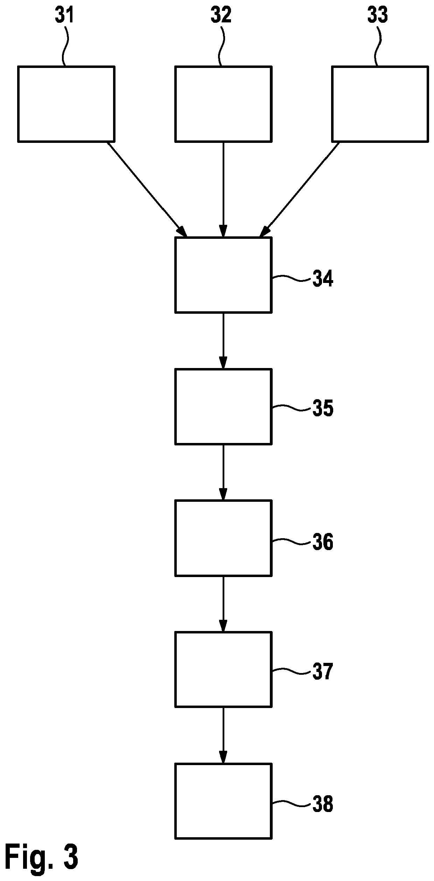

In Fig. 3 ist ein Flussdiagramm mit einem beispielhaften Ablauf des erfindungsgemäßen Verfahrens dargestellt. In Verfahrensschritten 31, 32 und 33 werden von einem Fahrzeug mittels Umfeld- und Fahrzeugsensoren, einer digitalen Karte und eines globalen Satellitenpositionssystems Umfelddaten, Kartendaten und Positionsdaten erfasst bzw. ausgelesen bzw. bestimmt. In Schritt 34 wird ein in der Datenbank bereits vorhandenes Situationsabbild an das Fahrzeug gesendet, welches in Verfahrensschritt 35 mit den vom Fahrzeug erfassten Daten verglichen wird. In Schritt 36 werden diejenigen vom Fahrzeug erfassten Daten, welche vom von in der Datenbank vorhandenen Situationsabbild abweichen, vom Fahrzeug an die Datenbank gesendet. Das in der lokalen Datenbank bereits vorhandene Situationsabbild wird in Verfahrensschritt 37 mit den vom Fahrzeug gesendeten Umfelddaten, Kartendaten und Positionsdaten zu einem aktuellen Situationsabbild fusioniert und in Schritt 38 erneut von der lokalen Datenbank an alle zu der aktuellen Situation gehörenden Fahrzeuge gesendet.

## Patentansprüche

1. Verfahren zur Erstellung eines aktuellen Situationsabbilds für einen festen Ort mittels einer ortsfesten Datenbank (16, 25) mit Datenfusionsmitteln und Fahrzeug-zu-X-Kommunikationsmitteln sowie einer Vielzahl von Fahrzeugen,
**dadurch gekennzeichnet, dass** dieses die Schritte aufweist:
- Erfassen von Umfelddaten zur Beschreibung von Objekten, die zur Topologie des Fahrzeugumfelds beitragen, mittels Umfeldsensoren und/oder Fahrzeugsensoren durch die jeweiligen Fahrzeuge,
- Auslesen von Kartendaten aus einem digitalen Speicher der jeweiligen Fahrzeuge
und
- Senden der Umfelddaten und/oder der durch die Umfelddaten ergänzten Kartendaten der Fahrzeuge (12, 14, 22, 24), welche die lokal begrenzte Situation an dem festen Ort beschreiben, mittels Fahrzeug-zu-X-Kommunikationsmitteln an die Datenbank (16, 25), wobei die Umfelddaten und/oder die durch die Umfelddaten ergänzten Kartendaten mit einem in der Datenbank (16, 25) bereits vorhandenen Situationsabbild kontinuierlich zu einem aktuellen Situationsabbild für den festen Ort fusioniert werden.

2. Verfahren nach Anspruch 1,
**dadurch gekennzeichnet,**
**dass** die Datenbank (16, 25) das aktuelle Situationsabbild an die von der lokal begrenzten Situation umfassten Fahrzeuge (12, 14, 22, 24) sendet und das aktuelle Situationsabbild von den Fahrzeugen (12, 14, 22, 24) mindestens einem Fahrerassistenzsystem zur Verfügung gestellt wird.

3. Verfahren nach mindestens einem der Ansprüche 1 bis 2,
**dadurch gekennzeichnet,**
**dass** die Umfelddaten und/oder die durch die Umfelddaten ergänzten Kartendaten von der Vielzahl von Fahrzeugen (12, 14, 22, 24) mit einer Übertragungspriorität an die Datenbank (16, 25) gesendet werden, welche das Senden und Empfangen von Daten, insbesondere Warninformationen, höherer Übertragungspriorität als der Übertragungspriorität der Umfelddaten und/oder der durch die Umfelddaten ergänzten Kartendaten nicht zu stören oder zu unterbrechen.

4. Verfahren nach mindestens einem der Ansprüche 1 bis 3,
**dadurch gekennzeichnet,**
**dass** von der Vielzahl von Fahrzeugen (12, 14, 22, 24) nur derartige Umfelddaten und/oder Kartendaten an die Datenbank (16, 25) gesendet werden, die vom von der Datenbank (16, 25) gesendeten aktuellen Situationsabbild abweichen.

5. Verfahren nach mindestens einem der Ansprüche 1 bis 4,
**dadurch gekennzeichnet,**
**dass** von der Vielzahl von Fahrzeugen (12, 14, 22, 24) Positionsdaten mittels eines globalen Satellitenpositionssystems bestimmt und mittels der Fahrzeug-zu-X-Kommunikationsmittel an die Datenbank (16, 25) gesendet werden und wobei die gesendeten Positionsdaten eine Identifikationsinformation der zu einer Bestimmung der Positionsdaten herangezogenen Satelliten umfassen.

6. Verfahren nach mindestens einem der vorhergehenden Ansprüche, **dadurch gekennzeichnet, dass** Objekte und Ereignisse im aktuellen Situationsabbild von der Datenbank (16, 25) mit Existenzwahrscheinlichkeiten versehen werden, wobei die Existenzwahrscheinlichkeiten der Objekte und Ereignisse aus dem Anteil der sie erfassenden Sensoren zu dem Anteil der sie nicht-erfassenden Sensoren bestimmt werden, wobei Sensoren, welche nicht zur Erfassung der jeweiligen Objekte oder Ereignisse geeignet sind, zur Bestimmung der Existenzwahrscheinlichkeiten unberücksichtigt bleiben.

7. Verfahren nach Anspruch 6,
**dadurch gekennzeichnet,**
**dass** die Existenzwahrscheinlichkeiten der Objekte von einem empfangenden Fahrzeug (12, 14, 22, 24) zusätzlich individuell ausgewertet werden.

8. System zur Erstellung eines aktuellen Situationsabbilds für einen festen Ort,
umfassend eine ortsfeste Datenbank (16, 25) mit Datenfusionsmitteln und Fahrzeug-zu-X-Kommunikationsmitteln sowie eine Vielzahl von Fahrzeugen (12, 14, 22, 24) mit jeweils einem digitalen Speicher und Umfeldsensoren und/oder Fahrzeugsensoren und Fahrzeug-zu-X-Kommunikationsmitteln, **dadurch gekennzeichnet, dass** die Datenbank (16, 25) eine lokal begrenzte Situation an dem festen Ort beschreibende Umfelddaten zur Beschreibung von Objekten, die zur Topologie des Fahrzeugumfelds beitragen, und/oder durch die Umfelddaten ergänzte Kartendaten von der Vielzahl von Fahrzeugen (12, 14, 22, 24) mittels der Fahrzeug-zu-X-Kommunikationsmittel empfängt,
wobei die Vielzahl von Fahrzeugen (12, 14, 22, 24) die Umfelddaten mittels der Umfeldsensoren und/oder der Fahrzeugsensoren an dem festen Ort erfasst,
wobei die Vielzahl von Fahrzeugen (12, 14, 22, 24) die Kartendaten aus dem jeweils einen digitalen Speicher ausliest, wobei die Datenfusionsmittel die Umfelddaten und/oder die durch die Umfelddaten ergänzten Kartendaten mit einem in der Datenbank (16, 25) bereits vorhandenen Situationsabbild kontinuierlich zu einem aktuellen Situationsabbild für den festen Ort fusionieren.

9. System nach Anspruch 8,
**dadurch gekennzeichnet,**
**dass** die Datenbank (16, 25) lokal an einem vom Situationsabbild umfassten Ort angeordnet ist.

10. System nach mindestens einem der Ansprüche 8 und 9,
**dadurch gekennzeichnet,**
**dass** die Umfeldsensoren ein oder mehrere Elemente aus der Gruppe
- Radarsensor,
- optischer Kamerasensor,
- Lidarsensor,
- Lasersensor,
- Ultraschallsensor,
- ESP-Sensor,
- ABS-Sensor und
- Neigungssensor
sind und die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung und
- Mobilfunkverbindung
Umfelddaten und/oder die Kartendaten senden und/oder empfangen.

11. System nach mindestens einem der Ansprüche 8 bis 10,
**dadurch gekennzeichnet,**
**dass** das System ein Verfahren nach mindestens einem der Ansprüche 1 bis 7 ausführt.

## Claims

1. A method for creating a current situation depiction for a fixed location by means of a stationary database (16, 25), having data merging means and vehicle-to-X communication means as well as a multiplicity of vehicles,
**characterized in that** said method has the steps of:
- capturing environment data in order to describe objects which contribute to the topology of the vehicle environment by means of environment sensors and/or vehicle sensors by the respective vehicles,
- extracting map data from a digital memory of the respective vehicles,
and
- sending the environment data and/or the map data , supplemented by the environment data, of the vehicles (12, 14, 22, 24), said data describing the locally bounded situation at the fixed location to the database (16, 25) using vehicle-to-X communication means, wherein the environment data and/or the map data supplemented by the environment data are continually merged with a situation depiction that is already present in the database (16, 25) to form a current situation depiction for the fixed location.

2. The method according to Claim 1,
**characterized in**
**that** the database (16, 25) sends the current situation depiction to the vehicles (12, 14, 22, 24) comprised by the locally bounded situation and in that the current situation depiction of the vehicles (12, 14, 22, 24) is provided to at least one driver assistance system.

3. The method according to at least one of Claims 1 to 2,
**characterized in**
**that** the environment data and/or the map data supplemented by the environment data are sent by the multiplicity of vehicles (12, 14, 22, 24) with a transmission priority to the database (16, 25), in order not to interfere with or interrupt the sending and receiving of data, in particular warning information, having a higher transmission priority than the transmission priority of the environment data and/or the map data supplemented by the environment data.

4. The method according to at least one of Claims 1 to 3,
**characterized in**
**that** only those environment data and/or map data which deviate from the current situation depiction sent by the database (16, 25), are sent by the multiplicity of vehicles (12, 14, 22, 24) to the database (16, 25).

5. The method according to at least one of Claims 1 to 4,
**characterized in**
**that** position data are determined by means of a global satellite position system and are sent using the vehicle-to-X communication means by the multiplicity of vehicles (12, 14, 22, 24) to the database (16, 25), and wherein the sent position data comprise a piece of identification information of the satellites used for determining the position data.

6. The method according to at least one of the preceding claims, **characterized in that** objects and events in the current situation depiction are provided with probabilities of existence by the database (16, 25), wherein the probabilities of existence of the objects and events are determined from the proportion of the sensors capturing them to the proportion of the sensors not capturing them, wherein sensors which are not suitable for capturing the respective objects or events are disregarded in order to determine the probabilities of existence.

7. The method according to Claim 6,
**characterized in**
**that** the probabilities of existence of the objects are additionally individually evaluated by a receiving vehicle (12, 14, 22, 24).

8. A system for creating a current situation depiction for a fixed location,
comprising a stationary database (16, 25) having data merging means and vehicle-to-X communication means as well as a multiplicity of vehicles (12, 14, 22, 24) each having a digital memory and environment sensors and/or vehicle sensors and vehicle-to-X communication means, **characterized in that** the database (16, 25) receives environment data describing a locally bounded situation at the fixed location in order to describe objects which contribute to the topology of the vehicle environment, and/or map data supplemented by the environment data from the multiplicity of vehicles (12, 14, 22, 24) using the vehicle-to-X communication means,
wherein the multiplicity of vehicles (12, 14, 22, 24) capture the environment data by means of the environment sensors and/or the vehicle sensors at the fixed location,
wherein the multiplicity of vehicles (12, 14, 22, 24) read the map data from the, in each case, one digital memory, wherein the data merging means continually merge the environment data and/or the map data supplemented by the environment data with a situation depiction that is already present in the database (16, 25) to form a current situation depiction for the fixed location.

9. The system according to Claim 8,
**characterized in that**
the database (16, 25) is arranged locally at a location comprised by the situation depiction.

10. The system according to at least one of Claims 8 and 9,
**characterized in that**
the environment sensors are one or more elements selected from the group consisting of
- radar sensor,
- optical camera sensor,
- lidar sensor,
- laser sensor,
- ultrasonic sensor,
- ESP sensor,
- ABS sensor and
- inclination sensor
and the vehicle-to-X communication means send and/or receive environment data and/or the map data on the basis of one or more connection classes selected from the group consisting of
- WLAN connection, in particular based on IEEE 802.11,
- ISM (Industrial, Scientific, Medical band) connection,
- Bluetooth® connection,
- ZigBee connection,
- UWB (Ultra Wide Band) connection,
- WiMax® (Worldwide Interoperability for Microwave Access) connection,
- infrared connection and
- mobile radio connection.

11. The system according to at least one of Claims 8 to 10,
**characterized in**
**that** the system carries out a method according to at least one of Claims 1 to 7.

## Revendications

1. Procédé de génération d'une représentation actuelle d'une situation pour un lieu fixe à l'aide d'une base de données fixe (16, 25) avec des moyens de fusion de données et de communication de véhicule à X ainsi qu'une pluralité de véhicules,
**caractérisé en ce que** ledit procédé comprend les étapes suivantes :
- détection de données d'environnement pour la description d'objets contribuant à la topologie de l'environnement du véhicule au moyen de capteurs d'environnement et/ou de capteurs de véhicule par les différents véhicules,
- extraction de données cartographiques d'une mémoire numérique des différents véhicules,
et
- transmission à la base de données (16, 25) des données d'environnement et/ou des données cartographiques complétées par les données d'environnement des véhicules (12, 14, 22, 24), lesquelles décrivent la situation localement délimitée sur le lieu fixe, à l'aide des moyens de communication de véhicule à X, les données d'environnement et/ou les données cartographiques complétées par les données d'environnement étant fusionnées de manière continue avec une représentation de la situation déjà existante dans la base de données (16, 25) pour former une représentation actuelle d'une situation pour le lieu fixe.

2. Procédé selon la revendication 1,
**caractérisé en ce**
**que** la base de données (16, 25) transmet la représentation actuelle d'une situation aux véhicules (12, 14, 22, 24) compris dans la situation localement délimitée et en ce que la représentation actuelle d'une situation est mise par les véhicules (12, 14, 22, 24) à la disposition d'au moins un système d'assistance au conducteur.

3. Procédé selon au moins une des revendications 1 à 2,
**caractérisé en ce**
**que** les données d'environnement et/ou les données cartographiques complétées par les données d'environnement (12, 14, 22, 24) sont transmises par la pluralité de véhicules avec une priorité de transmission à la base de données (16, 25) ne perturbant ou n'interrompant pas l'émission et la réception de données, en particulier d'informations d'alerte, ayant une priorité de transmission supérieure à la priorité de transmission des données d'environnement et/ou des données cartographiques complétées par les données d'environnement.

4. Procédé selon au moins une des revendications 1 à 3,
**caractérisé en ce**
**que** ne sont transmises par la pluralité de véhicules (12, 14, 22, 24) à la base de données (16, 25) que les données d'environnement et/ou les données cartographiques qui diffèrent de la représentation actuelle d'une situation transmise par la base de données (16, 25).

5. Procédé selon au moins une des revendications 1 à 4,
**caractérisé en ce**
**que** les données de position sont déterminées par la pluralité de véhicules (12, 14, 22, 24) au moyen d'un système de géo-positionnement par satellite et transmises à la base de données (16, 25) par des moyens de communication de véhicule à X, les données de position transmises comprenant une information d'identification des satellites impliqués pour une détermination des données de position.

6. Procédé selon au moins une des revendications précédentes,
**caractérisé en ce que** les objets et les événements dans la représentation actuelle d'une situation sont dotés de probabilités d'existence par la base de données (16, 25), lesdites probabilités d'existence des objets et des événements étant déterminées à partir de la proportion des capteurs qui les détectent par rapport à celle des capteurs non détecteurs, les capteurs non appropriés pour détecter les différents objets ou événements restant négligés pour la détermination des probabilités d'existence.

7. Procédé selon la revendication 6,
**caractérisé en ce**
**que** les probabilités d'existence des objets sont en outre évaluées individuellement par un véhicule récepteur (12, 14, 22, 24) .

8. Système pour la génération d'une représentation actuelle d'une situation pour un lieu fixe,
comprenant une base de données fixe (16, 25) avec des moyens de fusion de données et de communication de véhicule à X ainsi qu'une pluralité de véhicules (12, 14, 22, 24) pourvus chacun d'une mémoire numérique et de capteurs d'environnement et/ou de capteurs de véhicule et de moyens de communication de véhicule à X,
**caractérisé en ce que** la base de données (16, 25) reçoit de la pluralité de véhicules (12, 14, 22, 24), par les moyens de communication de véhicule à X, des données d'environnement décrivant une situation localement délimitée sur le lieu fixe pour la description d'objets contribuant à la topologie de l'environnement du véhicule, et/ou des données cartographiques complétés par les données d'environnement,
la pluralité de véhicules (12, 14, 22, 24) détectant les données d'environnement au moyen des capteurs d'environnement et/ou des capteurs de véhicule sur le lieu fixe,
la pluralité de véhicules (12, 14, 22, 24) extrayant les données cartographiques d'une mémoire numérique respective, les moyens de fusion de données fusionnant de manière continue les données d'environnement et/ou les données cartographiques complétées par les données d'environnement avec une représentation de la situation déjà existante dans la base de données (16, 25) pour former une représentation actuelle d'une situation pour le lieu fixe.

9. Système selon la revendication 8,
**caractérisé en ce que**
la base de données (16, 25) est localement située dans un lieu compris dans la représentation d'une situation.

10. Système selon au moins une des revendications 8 et 9,
**caractérisé en ce**
**que** les capteurs d'environnement sont un ou plusieurs éléments du groupe comprenant
- capteur radar,
- capteur de caméra optique,
- capteur lidar,
- capteur laser,
- capteur à ultrasons,
- capteur ESP,
- capteur ABS, et
- capteur d'inclinaison,
et en ce que les moyens de communication de véhicule à X émettent et/ou reçoivent les données d'environnement et/ou les données cartographiques sur la base d'une ou de plusieurs classes de liaisons du groupe comprenant
- liaison WLAN, en particulier suivant IEEE 802.11,
- liaison ISM (Industrial, Scientific, Medical Band),
- liaison Bluetooth®,
- liaison ZigBee,
- liaison UWB (Ultra Wide Band),
- liaison WiMax® (Worldwide Interoperability for Microwave Access),
- liaison infrarouge, et
- liaison radio mobile.

11. Système selon au moins une des revendications 8 à 10,
**caractérisé en ce**
**que** ledit système exécute un procédé selon au moins une des revendications 1 à 7.
